# EUROPÄISCHE PATENTSCHRIFT

(11) **EP 0 608 449 B1**
(45) Veröffentlichungstag und Bekanntmachung des Hinweises auf die Patenterteilung: **16.08.1995**
(21) Anmeldenummer: 93101159.7
(22) Anmeldetag: 27.01.1993
(51) Int. Cl.: H01S 3/03, H01S 3/07, H01S 3/083, H01S 3/086

(54) **Optisch gepumpter Ferninfrarot-Laser**
Optically pumped far-infrared laser
Laser à infrarouge lointain pompé optiquement

(43) Veröffentlichungstag der Anmeldung: 03.08.1994
(73) Patentinhaber: MAN Technologie AG, 86153 Augsburg (DE)
(72) Erfinder: van der Wal, Peter, 53229 Bonn (DE)

(56) Entgegenhaltungen:
- EP-A- 0 477 880
- CH-A- 0 665 921
- REVIEW OF SCIENTIFIC INSTRUMENTS Bd. 63, Nr. 10, Oktober 1992, New York, US, SS. 4672-4674, Y JIANG et al.: "Improved performance of an optically pumped FIR laser using metallic waveguide"

## Beschreibung

### Optisch gepumpter Ferninfrarot-Laser

Die Erfindung bezieht sich auf einen optisch gepumpten Ferninfrarot-Laser mit einem aus mindestens drei Spiegeln gebildeten Resonator, der in einem vakuumdichten, Lasergas enthaltenden Lasergehäuse angeordnet ist, in dem ferner Mittel zum Einkoppeln eines Pumplasers vorgesehen sind.

Bei den optisch gepumpten Ferninfrarot-Lasern (FIR-Lasern) ergibt sich im allgemeinen ein Problem bei der Leistungsstabilisierung, weil ein geringer Teil der im FIR-Laserresonator eingespeisten Pumpleistung in den Pumplaser (Kohlendioxd- oder Lachgaslaser, inkl. dotierte Ausführungen) zurückreflektiert wird. Somit sind die Stehwellenresonatoren von FIR-Laser und Pumplaser miteinander gekoppelt und ähnlich wie schwachgekoppelte Schwingungskreise zu betrachten. Diese Kopplung ruft im Pumplaser Frequenz- und Amplituden-Instabilität hervor, welche zu starken Amplitudenschwankungen im FIR-Laser führen. Dieser sogenannte Rückkopplungseffekt macht eine aktive Frequenzstabilisierung des Pumplasers praktisch unmöglich.

Zur Verwirklichung einer stabilen Pumplaserfrequenz und somit einer stabilen Ausgangsleistung des FIR-Lasers ist eine effektive optische Isolierung von Pumplaser und FIR-Laser unbedingt erforderlich. Da in vielen Fällen der Pumplaser im Wellenlängenbereich zwischen 9 und 11 »m verwendet werden soll, damit ein möglichst breites Spektrum von FIR-Laserfrequenzen zur Verfügung steht, sind universell breitbandige Lösungen mit klassischen Polarisationsmethoden (z. B. 1/4-Wellenlängenplättchen) nicht zu verwirklichen. Andere Methoden, z. B. Isolierung durch Akusto-optische Modulation oder schiefe Einkopplung, weisen erhebliche Verluste in der Pumpeffektivität auf.

Aus der Zeitschrift "Appl. Phys. Lett. 33 (7), 1. October 1978, S. 590 - 592" ist ein FIR-Laser der eingangs genannten Art bekannt, der als Ringlaser bezeichnet wird und der einen Resonator mit drei Spiegeln aufweist, die so ausgebildet und angeordnet sind, daß der Laserstrahl ringartig von einem Spiegel zum anderen Spiegel reflektiert wird. Bei diesem offenen Resonator wird die Einkopplung der Pumpleistung über ein Spezialgitter vorgenommen. Mit diesem bekannten Ringlaser werden zwar die Rückkopplungseffekte der Pumpleistung ausgeschaltet, jedoch führt der offene Resonator zu erheblichen Leistungsverlusten. Außerdem ist die bei der bekannten Einrichtung verwendete Einkopplungsmethode stark abhängig von der Wellenlänge des Pumplasers und des Ringlasers. "Review of Scientific Instruments 63(10), Oktober 1992, Seiten 4672-4674" offenbart einen optisch gepumpten "twin cavity" Laser der im fernen Infrarot arbeitet, wobei der Pumplaser durch eine Bohrung in dem Endspiegel in den Resonator eingekoppelt wird.

Der Erfindung liegt die Aufgabe zugrunde, einen Laser der eingangs genannten Art zu schaffen, der keine Rückkopplungseffekte aufweist und bei dem Leistungsverluste weitgehend vermieden werden.

Die Aufgabe wird erfindungsgemäß mit den Merkmalen des Anspruchs 1 gelöst.

Durch die Wahl und Anordnung von vier Spiegeln zur Bildung des Resonators ist es möglich, zwischen den Spiegeln Wellenleiter zu verwenden und damit Leistungsverluste gegenüber der bekannten Ringlasereinordnung drastisch zu verringern. In dem durch die vier Spiegel gebildeten Ringresonator kann die Pumpleistung nicht mehr zurückreflektiert werden. Eine Rückkopplung bleibt somit aus, so daß eine stabile FIR-Laserleistung erzeugt werden kann, wenn der Pumplaser aktiv stabilisiert wird.

Bei dem erfindungsgemäßen FIR-Ringlaser konnte eine vollkommene, wellenlängenunabhängige Isolierung zwischen Pumplaser und Ringlaser festgestellt werden. In Versuchsmessungen konnte nämlich festgestellt werden, daß die Pumpfrequenz problemlos durch Abstimmung des Pumplaser-Resonators geändert werden konnte. Damit ergibt sich der weitere Vorteil, daß die Laufrichtung der Wellenfront im FIR-Ringlaser von außen her vorgegeben werden kann, und zwar entweder durch Abstimmung des Ringlaser-Resonators oder durch Frequenzabstimmung des Pumplasers 25. Außerdem hat sich herausgestellt, daß die Effektivität des Pumpprozesses beim Einsatz des Ringlasers sehr viel höher ist als beim klassischen Stehwellenlaser. Messungen am erfindungsgemäßen System haben nämlich gezeigt, daß fast jedes Pumpphoton ein FIR-Photon erzeugt. Der erfindungsgemäße FIR-Ringlaser ist ferner für einen großen Wellenlängenbereich geeignet.

Die Spiegel können vorzugsweise paarweise miteinander gekoppelt werden, derart, daß die Spiegel eines Paares im 90 Grad-Winkel zueinander stehen. Damit werden nur zwei Lichtleiter benötigt, die die Laserwellenfront zwischen den Spiegelpaaren hin- und herleiten. Das erforderliche evakuierte Gehäuse reduziert sich dabei auf zwei getrennte Gehäuse mit reduzierten Innenräumen, in denen jeweils ein Spiegelpaar angeordnet ist und die die Enden der Wellenleiter hineinragen.

Die Wellenleiter sind Rohre aus einem dielektrischen Material, wie z. B. Pyrexglas oder Quarzglas, oder aus einem Metall, wie z. B. ein goldbeschichtetes Kupferrohr. Die beiden an den Wellenenden befindlichen Gehäuseteile werden mittels Stäben miteinander verbunden, die parallel zu den Wellenleitern verlaufen und die aus einem Material mit geringem thermischen Ausdehnungskoeffizienten hergestellt sind, um Längenänderungen des Resonators zu vermeiden. Geeignete Materialien sind Invar, Zerodur, Kohlenstoffasern (CFK).

Die Spiegel des Resonators sind im allgemeinen mit Reflexionsschichten aus Gold beschichtet. Die Einkopplung der Pumplasers erfolgt über einen Spiegel des Resonators, der dazu eine kleine, konische Bohrung aufweist. Es ist auch denkbar, die Pumplaserung aufzuteilen und sie gleichzeitig durch Bohrungen von zwei Spiegeln einzukoppeln.

Die Auskopplung des Laserstrahls erfolgt über einen Spiegel, der aus einem FIR-durchlässigem Material hergestellt ist und bei dem die Spiegelfläche mit Ausnahme einer kleinen, zentralen Fläche mit Gold beschichtet ist. Für die Laserstrahl-Auskopplung ist auch eine Beschichtung in Form einer Gitterstruktur möglich.

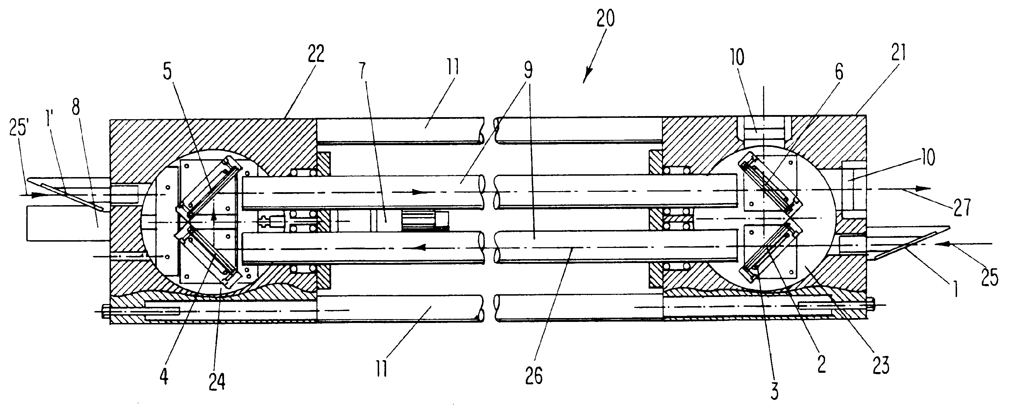

Die Erfindung wird anhand eines in der Zeichnung schematisch dargestellten Ausführungsbeispieles näher beschrieben.

In der Zeichnung ist ein FIR-Ringlaser 20 teilweise im Längsschnitt dargestellt. Der Ringlaser 20 enthält zwei getrennte Gehäuse 21 und 22, die mittels Stäben 11 aus Invar, Zerodur, Kohlenstoffasern oder anderen Materialien mit geringem thermischen Ausdehnungskoeffizienten miteinander starr verbunden sind. In den evakuierten Innenräumen 23, 24 der Gehäuse 21, 22 sind zur Bildung eines Ringsresonators jeweils ein Spiegelpaar 3, 6 bzw. 4, 5 in 45 Grad-Winkel-Anordnung vorgesehen derart, daß die reflektierten Strahlen von jeweils einem Spiegel auf den Nachbarspiegel treffen. Für den Strahlenweg zwischen den beiden Spiegelpaaren 3, 6 bzw. 4, 5 sind Wellenleiter 9 vorgesehen, die aus Quarz- oder Pyrexglas- oder Metallrohren bestehen. Für diese Konstruktion sind die Spiegel 3, 6 bzw. 4, 5 eines Spiegelpaares dicht aneinander, 90 Grad bildend, angeordnet. Damit wird Raum eingespart und der offene Weg der Strahlung im evakuierten Raum 23 bzw. 24 minimiert, so daß Leistungsverluste auf ein Mindestmaß reduziert werden können.

Durch ein an einem Stirnende des Ringlasers 20 angeordnetes Brewsterfenster 1 wird ein Pumplaser 25 in den evakuierten Gehäuseraum 23 gebracht, wo er durch eine Bohrung 2 in einem Spiegel 3 in den mit einem Lasergas gefüllten Ringresonator gelangt. Das Brewsterfenster 1 besteht beispielsweise aus Zinkselenid. Die Bohrung 2 im Spiegel 3 hat einen Durchmesser von 1 bis 2 mm.

Die Einkopplung des Pumplasers 25 kann auch gleichzeitig an beiden Stirnenden erfolgen, indem am zweiten Gehäuse 22 ebenfalls ein Brewsterfenster 1′ für einen zweiten Teil des Pumplasers 25′ vorgesehen werden. In diesem Fall würde in dem Spiegel 5 ebenfalls eine Bohrung vorzusehen sein.

Der im Ringresonator 4 bis 5, 9 erzeugte Laserstrahl 26 wird teilweise durch einen entsprechend gebildeten Spiegel 6 und einem vakuumdichten Fenster 10 des zugehörigen Gehäuses 21 ausgekoppelt. Für die Auskopplung des Laserstrahls 27 wird der Auskopplungsspiegel 6 des Ringresonators aus einem FIR-strahlendurchlässigem Material, das jedoch für den Pumplaser 25 undurchlässig ist, hergestellt. Der Spiegel 6 wird mit Ausnahme einer kleinen, zentralen Ellipse mit Gold beschichtet. Die Auskopplung erfolgt durch die unbeschichtete Stelle des Spiegels 6. Anstelle der Goldbeschichtung kann auch eine metallische Gitterstruktur aufgebracht werden, z. B. mittels lithografischer Methoden. Über diese metallische Gitterstruktur wird eine mehrschichtige, dielektrische Vergütung aufgedampft, die die Pumplaserung 25 effektiv reflektiert. Die Gitterstruktur kann so definiert werden, daß nur ein bestimmter Teil der Laserstrahlung (26) den Resonator verläßt.

Es ist vorteilhaft, wenn die Einkopplung des Pumplasers 25 und die Auskopplung des Laserstrahls 27 über eines der Spiegelpaare, z. B. 2, 6 erfolgt. Damit bleibt das zweite Spiegelpaar 4, 5 für die Abstimmung des Ringresonators frei. Hierzu ist das zweite Spiegelpaar 4, 5 auf hochpräzisen und spielfreien Kugelführungen gelagert. Mittels eines induktiven Aufnahmeelementes 8 wird die Position dieses Spiegelpaares 4, 5 und damit die Information über eine Längenänderung des Resonators ermittelt bzw. überwacht. Mittels der Differentialmikrometerschraube 7 wird die Position des Spiegelpaares 4, 5 entsprechend der gewünschten Resonatorlänge eingestellt.

Als Lasergas kann beispielsweise CH₃ OH, HCOOH, CH₂F₂ verwendet werden.

Die Änderungen der Laufrichtung der Wellenfront im FIR-Ringlaser sind von der Art des Lasergases abhängig. Homogen und inhomogen verbreitete Laserlinien zeigen unterschiedliche Verhalten. So ändert sich bei inhomogen verbreiterten Linien die Laufrichtung genau in der Mitte des Linienprofils, bei homogener Verbreitung hängt die Frequenz, bei der sich die Laufrichtung ändert, zusammen mit der Richtung in denen die Länge des FIR-Resonators oder die Frequenz des Pumplaseres geändert werden. Hier findet die Änderung der Laufrichtung nicht in der Mitte des Linienprofils statt.

## Patentansprüche

1. Optisch gepumpter Ferninfrarot-Laser mit einem aus mindestens drei Spiegeln gebildeten Ringresonator, der in einem vakuumdichten, Lasergas enthaltenden Lasergehäuse angeordnet ist, in dem ferner Mittel zur Einkopplung eines Pumplasers vorgesehen sind, dadurch gekennzeichnet, daß der Resonator aus vier 45 Grad orientierten Spiegeln (3 bis 6) und mindestens zwei Wellenleitern (9) besteht, wobei mindestens einer der Spiegel (3) mit einer Bohrung (2) zur Einkopplung des Pumplasers (25) und ein weiterer Spiegel (6) als Auskopplungsspiegel für die FIR-Wellenfront (27) ausgebildet sind.

2. Laser nach Anspruch 1, dadurch gekenzeichnet, daß der Auskopplungsspiegel (6) einen FIR-Laserstrahlung durchlässigen Bereich zur Auskopplung eines Teiles der FIR-Laserstrahlung (26) hat.

3. Laser nach Anspruch 1 oder 2, dadurch gekennzeichnet, daß die Spiegel paarweise, einen 90 Grad-Winkel bildend miteinander gekoppelt sind und daß die Spiegelpaare (3, 6 bzw. 4, 5) jeweils an den Enden von zwei parallel nebeneinander befindlichen Wellenleitern (9) angeordnet sind.

4. Laser nach Anspruch 3, dadurch gekennzeichnet, daß mindestens ein Spiegelpaar (4, 5) verstellbar gelagert ist.

5. Laser nach einem der vorhergehenden Ansprüche, dadurch gekennzeichnet, daß die Wellenleiter (9) Rohre aus einem dielektrischen Material, z. B. Pyrexglas, Quarzglas oder Metall bestehen.

6. Laser nach einem der vorhergehenden Ansprüche, dadurch gekennzeichnet, daß das Lasergehäuse zweiteilig ausgebildet ist, wobei jedes Gehäuseteil (21, 22) ein Spiegelpaar (3, 6 bzw. 4, 5) und jeweils ein Ende der Wellenleiter (9) aufnimmt.

7. Laser nach Anspruch 6, dadurch gekennzeichnet, daß die beiden Gehäuseteile (21, 22) mittels Stäben (11) aus einem Material mit geringem thermischen Ausdehnungskoeffizient, wie Invar, Zerodur oder Kohlenstoffasern, miteinander verbunden sind.

## Claims

1. An optically pumped far infrared laser comprising a ring resonator formed from at least three mirrors and disposed in a vacuum-tight laser housing containing laser gas and also provided with means for coupling in a pump laser, characterised in that the resonator consists of four 45° orientated mirrors (3 to 6) and at least two waveguides (9), at least one of the mirrors (3) being formed with a borehole (2) for coupling in the pump laser (25) and another mirror (6) being formed as a decoupling mirror for the FIR wavefront (27).

2. A laser according to claim 1, characterised in that the decoupling mirror (6) has a zone permeable to FIR laser radiation for decoupling part of the FIR laser radiation (26).

3. A laser according to claim 1 or 2, characterised in that the mirrors are coupled together in pairs to form a 90° angle and in that the mirror pairs (3, 6 and 4, 5) are each disposed at the ends of two waveguides (9) disposed in parallel relationship side by side.

4. A laser according to claim 3, characterised in that at least one mirror pair (4, 5) is mounted to be adjustable.

5. A laser according to any one of the preceding claims, characterised in that the waveguides (9) consist of tubes of a dielectric material, e.g. Pyrex glass, quartz glass or metal.

6. A laser according to any one of the preceding claims, characterised in that the laser housing is constructed in two parts, each part (21, 22) receiving a mirror pair (3, 6 and 4, 5) and each receiving one end of the waveguides (9).

7. A laser according to claim 6, characterised in that the two housing parts (21, 22) are interconnected by means of rods (11) of a material having a low coefficient of thermal expansion, such as Zerodur, carbon fibres, Invar.

## Revendications

1. Laser à infrarouge lointain à pompage optique, comportant un résonateur annulaire constitué d'au moins trois miroirs et disposé dans un boîtier de Laser étanche au vide contenant un gaz de Laser dans lequel sont, en outre, prévus des moyens d'introduction d'un rayon Laser de pompage, caractérisé en ce que le résonateur est constitué de quatre miroirs (3 à 6) orientés à 45 degrés et d'au moins deux guides d'ondes (9), au moins l'un des miroirs (3) étant réalisé avec un trou (2) d'introduction du rayon Laser de pompage et un autre miroir (6) étant constitué en tant que miroir de sortie du front d'onde (27) du Laser à infrarouge lointain.

2. Laser selon la revendication 1, caractérisé en ce que le miroir de sortie (6) comporte une zone perméable au rayonnement Laser à infrarouge lointain pour la sortie d'une partie du rayonnement Laser à infrarouge lointain (26).

3. Laser selon la revendication 1 ou la revendication 2, caractérisé en ce que les miroirs sont liés entre eux par paires en faisant un angle de 90 degrés et en ce que les paires de miroirs (3,6 et 4,5) sont respectivement disposées aux extrémités de deux guides d'ondes (9) placés parallèlement l'un à côté de l'autre.

4. Laser selon la revendication 3, caractérisé en ce qu'au moins une paire de miroirs (4,5) est montée de façon réglable.

5. Laser selon l'une des revendications précédentes, caractérisé en ce que les guides d'ondes (9) sont des tubes constitués en un matériau diélectrique, par exemple en verre pyrex, en verre quartzeux ou en métal.

6. Laser selon l'une des revendications précédentes, caractérisé en ce que le boîtier de Laser est constitué en deux parties, chaque partie de boîtier (21,22) contenant une paire de miroirs (3,6 ; 4,5) et une extrémité respective des guides d'ondes (9).

7. Laser selon la revendication 6, caractérisé en ce que les deux parties de boîtier (21,22) sont reliées entre elles au moyen de barreaux (11) en un matériau à faible coefficient de dilatation thermique, tel que le Zerodur, les fibres de carbone et l'Invar.
